(19) Europäisches Patentamt
European Patent Office
Office européen des brevets

(11) **EP 2 892 177 A1**

(12) **EUROPEAN PATENT APPLICATION**

(43) Date of publication:
**08.07.2015 Bulletin 2015/28**

(51) Int Cl.:
*H04L 9/08* (2006.01)   *H04L 9/30* (2006.01)
*H04L 29/06* (2006.01)

(21) Application number: **14305004.5**

(22) Date of filing: **03.01.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing
92130 Issy-les-Moulineaux (FR)**

(72) Inventors:
• **Heen, Olivier**
  **35576 Cesson Sévigné (FR)**
• **Joye, Marc**
  **35576 Cesson Sévigné (FR)**
• **Libert, Benoît**
  **35576 Cesson Sévigné (FR)**

(54) **Proxy re-encryption methods and devices**

(57)  The invention is directed to a proxy re-encryption scheme with limited delegations. To generate a $\ell$-level ciphertext for a message, wherein $\ell$ is an integer, a $\ell$-level ciphertext enabling $\ell - 1$ re-encryptions and $L$-1 is a maximum number of possible re-encryptions, a processor (112) generates, in a $\ell$-level group of prime order $p$, a $\ell$-level encryption key for the $\ell$-level ciphertext from a public key and a $\ell$-level generator for the $\ell$-level group; obtains a first ciphertext component by multiplying the message with a generator of a final group $\mathbb{G}_L$ of a multilinear configuration with $L$ levels, the generator being raised to the power of an integer exponent; obtains a second ciphertext component by taking the $\ell$-level encryption key to the power of the integer exponent; and outputs the $\ell$-level ciphertext comprising the integer $\ell$, the first ciphertext component and the second ciphertext component. In a preferred embodiment, the processor (112) includes an indicator of a time period in the $\ell$-level ciphertext; and, if the integer $\ell > 1$, obtains a third ciphertext component by taking a hash value over the time period to the power of the integer exponent and includes the third ciphertext component in the $\ell$-level ciphertext that is output. Also provided are the re-encryption and decryption counterparts.

Figure 1

**Description**

<u>TECHNICAL FIELD</u>

The present invention relates generally to cryptography, and in particular to proxy re-encryption.

<u>BACKGROUND</u>

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Proxy re-encryption (PRE) is a primitive that allows a proxy to transform ciphertexts initially encrypted under the public key of a sender party A into ciphertexts that can be decrypted by a receiver party B. The proxy can do this without seeing the plaintext and without having access to A or B's private key. Instead, the proxy only uses a re-encryption key supplied by A.

Two categories of schemes can be distinguished. In bidirectional schemes, the proxy is able to transform in both directions with the same re-encryption key. In more powerful unidirectional schemes, the proxy is able to transform from A to B without necessarily being able to re-encrypt from B to A.

In most known unidirectional PRE systems, after a re-encryption from A to B, a ciphertext cannot be re-encrypted from B to C. This is however possible in some solutions, so-called multi-hop unidirectional schemes, but these suffer from certain limitations. Specifically, there is no way for the sender of a message to decide how many times a ciphertext can be re-encrypted. This is a significant limitation since, in many natural applications, the sender may not want to allow arbitrarily many re-directions. The only exception was considered in J. Devigne. Protocoles de re-chiffrement pour le stockage de données. PhD thesis, Université de Caen Basse-Normandie, December 2013. The latter work suggests a unidirectional proxy re-encryption system supporting a bounded number of re-encryptions. However, as will be discussed later on, it suffers from at least two shortcomings.

The following syntactic definition of unidirectional proxy re-encryption extends the definition suggested by G. Ateniese, K. Fu and S. Hohenberger in "Improved Proxy Re-Encryption Schemes with Applications to Secure Distributed Storage" in NDSS, 2005 and in ACM TISSEC , 9(1): pp. 1-30, 2006.

**Definition 1**. A multi-hop unidirectional PRE scheme for L levels with temporary delegation consists of a tuple of algorithms (Global-Setup, Keygen, ReKeygen, Enc, ReEnc, Dec):

- **Global-Setup**(A, *L, T)* → (par): this algorithm is run by a trusted party (a user). Given a security parameter $\lambda \in N$, a desired number of levels $L \in \text{poly}(\lambda)$ and an integer *T* denoting the number of time periods, it outputs a set par of public parameters to be used by all parties in the scheme.
- **Keygen**(par) → *(sk_i, pk_i):* this randomized algorithm is run by user *i.* Given public parameters par, it outputs a private/public key pair *(sk_i, pk_i).*
- **ReKeygen**(par, *sk_i, pk_j, t)* → $R_{ijt}$: given public parameters par, the integer *T,* the private key *sk_i* of user *i*, the public key *pk_j* of *user j* and an integer $t \in \{1, ...,T\}$ denoting a time period, this (possibly randomized) algorithm outputs a key $R_{ijt}$ that allows transforming ciphertexts intended for user *i* into lower-level ciphertexts (this notion is detailed later) encrypted for user *j* for the time period *t.*
- **Encrypt**(par, *pk_i, t, ℓ, M)* → C: given public parameters par, the period number $t \in \{1, ...,T\}$, a receiver's public key *pk_i*, an integer $ℓ \in \{1, ..., L\}$ and a plaintext *M,* this probabilistic algorithm outputs a ℓ-th level ciphertext C for the time period *t.* If ℓ = 1, C cannot be re-encrypted for another user.
- **ReEnc**(par, *t, ℓ, ℓ', R_{ijt}, C)* → *C':* this possibly randomized algorithm takes as input the public parameters par, the integers $t \in \{1, ...,T\}$ and ℓ ,ℓ' ∈ {1, ... , *L},* the re-encryption key $R_{ijt}$ and a ℓ -th level ciphertext *C.* It returns ⊥ if either: (i) *C* is not a ℓ-th level ciphertext for time period t encrypted under user *i*'s public key; (ii) ℓ' ≥ ℓ. Otherwise (i.e., if *C* is an ℓ - th level ciphertext encrypted for user *i* at time period *t* and ℓ' < ℓ), it outputs an ℓ'-th level ciphertext C' for the same time period *t* and re-encrypted for user *j*. If ℓ = 2, then ℓ' = 1 is forced so that the new ciphertext *C'* cannot be further re-encrypted.
- **Dec**(par, *sk, t, ℓ, C)* → *M*: on input a private key *sk*, a ℓ-th level ciphertext *C*, two integers $t \in \{1, ...,T\}$ and $ℓ \in \{1, ..., L\}$, and public parameters par, this algorithm outputs a plaintext *M* or, if *C* is not a ℓ-th level ciphertext for time period *t,* a special symbol ⊥.

For any common public parameters par, for any message *M,* any integers $t \in \{1, ... , T\}$, ℓ,ℓ' ∈{1, ..., *L*} such that ℓ'<ℓ and any couple of private/public key pairs *(sk_i, pk_i), (sk_j, pk_j)*, these algorithms should satisfy the following

conditions of correctness:

$$\text{Dec}(\texttt{par}, sk_i, t, \ell, \text{Enc}(\texttt{par}, pk_i, t, \ell, M)) = M ;$$

and

$$\text{Dec}(\texttt{par}, sk_j, t, \ell', \text{ReEnc}(\texttt{par}, t, \ell, \ell', \text{ReKeygen}(\texttt{par}, sk_i, pk_j, t), \text{Enc}(\texttt{par}, pk_i, t, \ell, M))) = M.$$

To lighten the notation in this description, the set of common public parameters par, taken as input by all but one of the above algorithms, will sometimes be omitted. Similarly, the time interval $t$ may be omitted when it does not vary within a formula. Under these simplifications, the above two conditions read as follows:

$$\text{Dec}(sk_i, \ell, \text{Enc}(pk_i, \ell, M)) = M ;$$

and

$$\text{Dec}(sk_j, \ell', \text{ReEnc}(\ell, \ell', \text{ReKeygen}(sk_i, pk_j), \text{Enc}(pk_i, \ell, M))) = M.$$

It is noted that the above syntax syntax makes it possible for the proxy to decide which level $\ell'$ the re-encrypted ciphertext will fall into. Namely, when receiving an $\ell$-th level ciphertext, the proxy can decide not to re-encrypt it at level $\ell$-1, but at a lower lever $\ell' < \ell$-1. This allows the proxy to further restrict the number of subsequent re-directions (without having to obtain a new re-encryption key). For example, if a sender wants to send a message to one of his Facebook friends while allowing up to 3 successive re-encryptions, the proxy can dynamically choose to tolerate only one subsequent re-encryption. The effective number of re-encryptions is thus the lowest of the sender-chosen and proxy-chosen number of hops.

<u>Security definitions</u>

**Security at level L**. The definition of security at level $L$ considers a challenger that produces a set $HU$ of honest users' public keys. The attacker is directly provided with all re-encryption keys for which the sender and the receiver are both honest. Also, the adversary is granted access to a delegation oracle that returns re-encryption keys on behalf of honest senders for arbitrary receivers' public keys. By "arbitrary" is meant that the adversary can choose any element of the pre-determined (and publicly recognizable) public-key space without necessarily knowing the corresponding secret key.
In Definition 2, it is assumed that the target public key is by the adversary (among all public keys in HU) in the challenge phase.
**Definition 2.** A (multi-hop) unidirectional PRE scheme is semantically secure at level $L$ if the probability

$$\Pr \Big[ \{(pk_i, sk_i) \leftarrow \text{Keygen}(\lambda)\}_{i \in HU}, \{R_{ii't} \leftarrow \text{ReKeygen}(sk_i, pk_{i'}, t)\}_{i,i' \in HU, t \in \{1,\dots,T\}},$$

$$(M_0, M_1, i^*, t^*, St)$$

$$\leftarrow A^{O_{deleg}} \big(\{pk_i\}_{i \in HU}, \{R_{ii't}\}_{i,i' \in HU, t \in \{1,\dots,T\}}\big), \; d^* \xleftarrow{R} \{0,1\},$$

$$C^* = \text{Enc}(pk_{i^*}, t^*, L, M_{d^*}), d' \leftarrow A^{O_{deleg}}(C^*, St): d' = d^* \Big]$$

is neglibly (as a function of security parameter $\lambda$) close to 1/2 for any PPT adversary $A$. In the notation, $St$ is the state maintained by A while $pk_i{}^*$ denotes the public key of the target user that is chosen by the adversary in the set $HU$. The adversary $A$ is given access to all re-encryption keys between honest users. It is also allowed to query any re-encryption key but those that would allow re-encrypting from the target user $i^*$ to some user under its control. In the game, it is said that $A$ has advantage $\varepsilon$ if this probability, taken over random choices of A and all oracles, is at least $1/2 + \varepsilon$. The delegation oracle proceeds as follows:

Delegation $\mathcal{O}_{deleg}$: on input *(pk<sub>i</sub>, pk, t),* where $t \in \{1, ..., T\}$, $pk_i$ is a public key in $HU$ and $pk$ is a public key of A's choice, this oracle responds with the re-encryption key ReKeygen(*sk<sub>i</sub>, pk, t).* If $t^*$ denotes the time period chosen by A in the challenge phase, the oracle cannot be invoked for time period $t^*$ at any time.

**Master secret security**. Ateniese et al. defined another important security requirement for unidirectional PRE schemes. This notion, called master secret security (a.k.a. collusion-resistance), demands that no coalition of dishonest delegatees be able to pool their re-encryption keys in order to expose the private key of their common delegator. More formally, the following probability should be negligible as a function of the security parameter $\lambda$.

$$
\begin{aligned}
\Pr[&(pk^*, sk^*) \leftarrow \mathrm{Keygen}(\lambda), \{(pk_x, sk_x) \leftarrow \mathrm{Keygen}(\lambda)\}, \{R_{*x} \\
&\leftarrow \mathrm{ReKeygen}(sk^*, pk_x)\}, \{R_{x*} \leftarrow \mathrm{ReKeygen}(sk_x, pk^*)\}, \gamma \\
&\leftarrow A(pk^*, \{pk_x, sk_x\}, \{R_{*x}\}, \{R_{x*}\}): \gamma = sk^*]
\end{aligned}
$$

A stronger notion which is made achievable by bounding the number of re-encryptions that a ciphertext can undergo is considered. The notion of semantic security at the first level is easily seen to imply the master secret security: any successful master-secret adversary is also able to break the semantic security at the first level. However, the converse is not true.

**Semantic security at the first level.** The second desired security notion is the inability to distinguish first-level ciphertexts, even when the adversary is granted access to all re-encryption keys. This time, when A invokes oracle $\mathcal{O}_{deleg}$ with receivers' public keys of her choosing, there is no restriction.

In fact, the security of first-level encryptions can be captured by a simpler definition where the adversary is challenged on a single honest user's public key $pk_0$ and is allowed to generate any other public key for which she makes delegation queries.

**Definition 3**. A (multi-hop) unidirectional PRE scheme is semantically secure at level 1 if the probability

$$
\begin{aligned}
\Pr\Big[&(pk_0, sk_0) \leftarrow \mathrm{Keygen}(\lambda), (M_0, M_1, t^*, St) \\
&\leftarrow A^{\mathcal{O}_{deleg}}(pk_0),\ d^* \overset{R}{\leftarrow} \{0,1\}, \\
&C^* = \mathrm{Enc}(pk_0, t^*, 1, M_{d^*}), d' \leftarrow A^{\mathcal{O}_{deleg}}(C^*, St): d' = d^*\Big]
\end{aligned}
$$

is negligibly close to 1/2 for any PPT adversary $A$. In the above notations, St is the state maintained by $A$. The adversary $A$ is given access to all re-encryption keys without any restriction. The delegation oracle proceeds in the same way as in the previous definition but it also runs ReKeygen(*sk<sub>0</sub>*, ·, t*) upon request.

Multilinear maps

It is assumed that a multi-linear group generator $\mathcal{G}$ is available (for examples, see S. Garg, C. Gentry, S. Halevi. Candidate Multilinear Maps from Ideal Lattices. In Eurocrypt'13, in Lecture Notes in Computer Science, vol. 7881, p. 1-17. S. Garg, C. Gentry, S. Halevi, A. Sahai, B.Waters. Attribute-Based Encryption for Circuits from Multilinear Maps. In Crypto'13, in Lecture Notes in Computer Science 8043, p. 479-499. J.-S. Coron, T. Lepoint, M. Tibouchi. Practical Multilinear Maps over the Integers, in Lecture Notes in Computer Science 8043, p. 476-493), taking as input

a security parameter $\lambda \in \mathbb{N}$ and an integer $L \in \mathbb{N}$ indicating the allowed number of levels. Algorithm $\mathcal{G}$ $(\lambda, L)$ outputs a set of groups $\mathbf{G} = (\mathbb{G}_1, ..., \mathbb{G}_L)$ each of prime order $p > 2^\lambda$. For each $\ell \in \{1, ..., L\}$, a generator $g_\ell$ of $\mathbb{G}_\ell$ will be computable from the description of $\mathbb{G}_\ell$. In addition, $g_1 = g$. The availability is assumed of a sequence of bilinear maps

$$\{e \colon \mathbb{G}_i \times \mathbb{G}_j \to \mathbb{G}_{i+j} \,|\, i, j \geq 1, i + j \leq L\}$$

with the following properties:

1. $e\left(g_i^a, g_j^b\right) = g_{i+j}^{ab}$ for any $(g_i, g_j) \in \mathbb{G}_i \times \mathbb{G}_j$ and $a, b \in \mathbb{Z}$. In particular, $e(g_i, g_j) = g_{i+j}$ for each $i, j$ such that $i + j \leq L$.

2. $e(\cdot, \cdot)$ is efficiently computable for any input pair.

In this setting, the intractability of a variant of the Decision Bilinear Diffie-Hellman problem is assumed.

**Definition 4**. The *Multi-Linear Decision Bilinear Diffie-Hellman Inversion (ML-DBDHI)* assumption is the infeasibility of distinguishing $g_L^{b/a}$ from a random element of $\mathbb{G}_L$ given $(g, g_2, ..., g_L, g^a, g^b)$. More formally, for any PPT distinguisher B, the assumption says that

$$\left| \Pr\left[ \mathcal{B}\left(\mathbf{G}, g, g_2, ..., g_L, g^a, g^b, g_L^{b/a}\right) = 1 \,\middle|\, a, b \xleftarrow{R} \mathbb{Z}_p \right] \right.$$

$$\left. - \Pr\left[ \mathcal{B}(\mathbf{G}, g, g_2, ..., g_L, g^a, g^b, g_L^z) = 1 \,\middle|\, a, b, z \xleftarrow{R} \mathbb{Z}_p^* \right] \right| \in \mathrm{negl}(\lambda)$$

**Definition 5**. The *Multi-Linear Decision Bilinear Diffie-Hellman (ML-DBDH)* assumption is the hardness of distinguishing $g_L^{b \cdot \prod_{i=1}^L a_i}$ from random element of $G_L$ given a tuple $\left(g, g_2, ..., g_L, \{g^{a_i}\}_{i=1}^L, g^b\right)$. More formally, for any PPT distinguisher B, the assumption says that

$$\left| \Pr\left[ \mathcal{B}\left(\mathbf{G}, g, g_2, ..., g_L, g^{a_1}, ..., g^{a_L}, g^b, g_L^{b \cdot \prod_{i=1}^L a_i}\right) = 1 \,\middle|\, a_1, ..., a_L, b \xleftarrow{R} \mathbb{Z}_p \right] \right.$$

$$\left. - \Pr\left[ \mathcal{B}(\mathbf{G}, g, g_2, ..., g_L, g^{a_1}, ..., g^{a_L}, g^b, g_L^z) = 1 \,\middle|\, a_1, ..., a_L, b, z \xleftarrow{R} \mathbb{Z}_p \right] \right|$$

$$\in \mathrm{negl}(\lambda)$$

The concept of proxy re-encryption (PRE) dates back to the work of Blaze, Bleumer, and Strauss in 1998 [M. Blaze, G. Bleumer, M. Strauss. Divertible Protocols and Atomic Proxy Cryptography. In Eurocrypt'98, Lecture Notes in Computer Science 1403, pages 127-144, 1998].

A naive way for the delegator to implement such a mechanism is to simply store his private key at the proxy when he is unavailable: when a ciphertext is intended for him, the proxy decrypts it using its copy of the private key and re-encrypts the plaintext using the delegatee's public key. The obvious problem with this strategy is that the proxy learns the plaintext and the delegator's private key, which is what the PRE primitive aims to avoid.

To avoid this, Blaze, Bleumer and Strauss proposed a PRE scheme where the proxy is kept from knowing plaintexts and secret keys. It partially solves the problem since - when re-encrypting from key $x$ to key $y$ - the proxy is unable to learn the plaintext or the secret keys $x$ and $y$. Its inherent limitation lies in that the proxy key $y/x$ also allows translating ciphertexts from Bob to Alice, which may be undesirable in situations where trust relationships are not symmetric. Another shortcoming is that the proxy and the delegatee can collude to expose the delegator's private key $x$ given $y/x$ and $y$.

In 2005, Ateniese, Fu, Green and Hohenberger [G. Ateniese, K. Fu, M. Green, S. Hohenberger. Improved Proxy Re-Encryption Schemes with Applications to Secure Distributed Storage. In NDSS, 2005. Improved proxy re-encryption schemes with applications to secure distributed storage. In ACM TISSEC , 9(1): pp. 1-30, 2006.] showed the first examples of unidirectional proxy re-encryption schemes based on bilinear maps. Moreover, they obtained the master key security property in that the proxy is unable to collude with delegatees in order to expose the delegator's secret. The constructions are also efficient, semantically secure assuming the intractability of decisional variants of the Bilinear Diffie-Hellman problem [D. Boneh, M. Franklin. Identity-based encryption from the Weil pairing. In Crypto'01, Lecture Notes in Computer Science 2139, pp. 213-229. Springer, 2001.].

Canetti and Hohenberger [R. Canetti, S. Hohenberger. Chosen-Ciphertext Secure Proxy Re-Encryption. In ACM CCS'07. pages 185-194. ACM Press, 2007.] gave a definition of security against chosen-ciphertext attacks for PRE schemes and described an efficient construction satisfying this definition. Like the Blaze, Bleumer and Strauss scheme, their construction is bidirectional. The case of unidirectional chosen-ciphertext-secure PRE schemes was addressed by Libert and Vergnaud [B. Libert, D. Vergnaud. Unidirectional Chosen-Ciphertext Secure Proxy Re-Encryption. In PKC'08, Lecture Notes in Computer Science 4939. Springer, 2008. Unidirectional Chosen-Ciphertext Secure Proxy Re-Encryption. IEEE Transactions on Information Theory 57(3), pp. 1786-1802, 2011.], who also considered traceability mechanisms [B. Libert, D. Vergnaud. Tracing Malicious Proxies in Proxy Re-encryption. In Pairing'08, Lecture Notes in Computer Science 5209. Springer, 2008.]. Chosen-ciphertext-secure unidirectional schemes were further studied in [J. Weng, R. Deng, S. Liu, K. Chen. Chosen-ciphertext secure bidirectional proxy re-encryption schemes without pairings. In Information Sciences 180(24), pp. 5077-5089, 2010. J. Weng, M. Chen, Y. Yang, R. Deng, K. Chen, F. Bao. CCA-Secure Unidirectional Proxy Re-Encryption in the Adaptive Corruption Model without Random Oracles. IACR Cryptology ePrint Archive 2010, Report 265, 2010. G. Hanaoka, Y. Kawai, N. Kunihiro, T. Matsuda, J. , R. Zhang, Y. Zhao. Generic Construction of Chosen Ciphertext Secure Proxy Re-Encryption. In CT-RSA 2012, Lecture Notes in Computer Science 7178, pp. 349-364, 2012.]. Attempts were also made [J. Shao, Z. Cao. CCA-Secure Proxy Re-encryption without Pairings. In Public Key Cryptography 2009, pp. 357-376, Lecture Notes in Computer Science 5443, 2009. J. Weng, R. Deng, S. Liu, K. Chen. Chosen-ciphertext secure bidirectional proxy re-encryption schemes without pairings. In Information Sciences 180(24), pp. 5077-5089, 2010. T. Matsuda, R. Nishimaki, K. Tanaka. CCA Proxy Re-Encryption without Bilinear Maps in the Standard Model. In Public Key Cryptography 2010, Lecture Notes in Computer Science 6056, pp. 261-278, 2010.] to construct unidirectional and bidirectional PRE schemes without using bilinear maps but some of them were found to be flawed [S. Chow, J. Weng, Y. Yang, R. Deng. Efficient Unidirectional Proxy Re-Encryption. In Africacrypt 2010, Lecture Notes in Computer Science 6055, pp. 316-332, 2010. J. Weng, Y. Zhao, G. Hanaoka. On the Security of a Bidirectional Proxy Re-encryption Scheme from PKC 2010. In Public Key Cryptography 2011, Lecture Notes in Computer Science 6571, pp. 284-295, 2011.].

Many other works - the first being [M. Mambo, E. Okamoto. Proxy Cryptosystems: Delegation of the Power to Decrypt Ciphertexts. In IEICE Trans. Fund. Elect. Communications and CS, E80-A/1, pages 54-63, 1997.] - consider applications where data encrypted under a public key $pk_A$ should eventually be encrypted under a different key $pk_B$. In proxy encryption schemes [M. Jakobsson. On Quorum Controlled Asymmetric Proxy Re-encryption. In PKC'99, Lecture Notes in Computer Science 1560, pages 112-121. Springer, 1999. Y. Dodis, A.-A. Ivan. Proxy Cryptography Revisited. In *NDSS'03,* 2003.], a receiver Alice allows a delegatee Bob to decrypt ciphertexts intended for her with the help of a proxy by providing them with shares of her private key. This requires delegatees to store an additional secret for each new delegation. Dodis and Ivan present efficient proxy encryption schemes based on RSA, the Decision Diffie-Hellman problem as well as in an identity-based setting [A. Shamir. Identity based cryptosystems and signature schemes. In Crypto'84, Lecture Notes in Computer Science 196, pages 47-53. Springer, 1984. D. Boneh, M. Franklin. Identity-based encryption from the Weil pairing. In Crypto'01, Lecture Notes in Computer Science 2139, pp. 213-229. Springer, 2001.] under bilinear-map-related assumptions.

Proxy re-encryption schemes are a special kind of proxy cryptosystems where delegatees only need to store their own decryption key. They find applications in secure e-mail forwarding, digital rights management (DRM) or distributed storage systems (e.g. the papers by Ateniese, Fu, Green and Hohenberger). The signature analogue, also suggested by Blaze, Bleumer and Strauss in 1998, of PRE systems was considered in [G. Ateniese, S. Hohenberger. Proxy re-signatures: new definitions, algorithms, and applications. In ACM Conference on Computer and Communications Security, pages 310-319, ACM Press, 2005. B. Libert, D. Vergnaud. Multi-Use Unidirectional Proxy Re-Signatures. In ACM-CCS'08, ACM-Press, 2008.]. The two techniques were combined [G. Taban, A. Cárdenas, V. D. Gligor. Towards a secure and interoperable DRM architecture. In DRM'06, ACM workshop on Digital rights management, pp. 69-78. ACM, 2006.] to design interoperable DRM systems where digital content can be translated between devices from different DRM domains.

From a theoretical point of view, positive obfuscation results for re-encryption functionalities were presented in [S. Hohenberger, G. N. Rothblum, a. shelat, V. Vaikuntanathan. Securely Obfuscating Re-encryption. In TCC'07, Lecture Notes in Computer Science 4392, pages 233-252. Springer, 2007. N. Chandran, M. Chase, V. Vaikuntanathan. Functional Re-encryption and Collusion-Resistant Obfuscation. In TCC'12, Lecture Notes in Computer Science 7194 , pp. 404-421, Springer, 2012.].

Green and Ateniese [M. Green, G. Ateniese. Identity-Based Proxy Re-encryption. In ACNS'07, Lecture Notes in Computer Science 4521, pages 288-306. Springer, 2007.] studied the problem of identity-based PRE and proposed a unidirectional scheme that can be made chosen-ciphertext secure. Their security results are presented only in the random oracle model. Also, the recipient of a re-encrypted ciphertext needs to know who the original receiver was in order to decrypt a re-encryption. In the standard model, Chu and Tzeng [C.-K. Chu, W. G. Tzeng. Identity-Based Proxy Re-encryption Without Random Oracles. In ISC'07, Lecture Notes in Computer Science 4779, pp. 189-202, Springer, 2007.] described another identity-based PRE scheme that extends to provide chosen-ciphertext security. Their scheme is both multi-hop and unidirectional but fails to provide collusion-resistance as the delegator's private key is trivially exposed when a dishonest delegatee and a proxy pool their information.

In 2009, Ateniese, Benson and Hohenberger [G. Ateniese, K. Benson, S. Hohenberger. Key-Private Proxy Re-Encryption. Cryptology ePrint Archive: Report 2008/463, 2008.] analyzed the notion of ciphertext anonymity (a.k.a. key privacy) in proxy re-encryption. This notion demands that even the proxy performing translations be unable to infer useful information on the identities of the participants between which it re-encrypts ciphertexts.

Several recent works [J. Shao, Z. Cao,. Multi-use unidirectional identity-based proxy re-encryption from hierarchical identitybased encryption. In Information Sciences, pp. 83-95, 2012. J. Shao, P. Liu, Z. Cao, G. Wei. Multi-Use Unidirectional Proxy Re-Encryption. In IEEE International Conference on Communications (ICC) 2011, pp. 1-5, 2011. H. Wang, Z. Cao, L. Wang. Multi-use and unidirectional identity-based proxy re-encryption schemes. Information Sciences 180(20), pp. 4042-4059, 2010.] described multi-hop unidirectional PRE schemes that provably achieve master secret security. Unfortunately, the size of ciphertexts grows at each re-encryption and the sender has no control on how many times their encrypted messages will be re-directed. This also implies that a ciphertext is distinguishable from a re-encrypted text. Moreover, these schemes provide no way for delegators to limit the validity of their delegations within a certain time interval.

A recent work (J. Devigne. Protocoles de re-chiffrement pour le stockage de données. PhD thesis, Universite de Caen Basse-Normandie, December 2013) described a unidirectional system supporting a bounded number of re-encryptions. However, the maximal number of re-encryption is fixed and the sender does not have the flexibility to choose the number of re-encryptions he wants to tolerate depending on the content. Furthermore, Devigne's scheme does not restrict the ability of the proxy to re-encrypt to specific time periods. In practice, it is desirable to have a scheme where delegations do not necessarily remain effective forever.

It will be appreciated that it is desired to have a unidirectional proxy re-encryption scheme that, at least in one embodiment, simultaneously combines three properties.

First, the PRE scheme should allow ciphertexts to be re-encrypted more than once and additionally resist against collusions between the delegatee and the proxy (meaning that, even if they collaborate, they should remain unable to compute the delegator's private key). At the same time, the solution should support *limited delegations:* namely, it should allow the sender of a message to decide how many ciphertext redirections he wants to enable for the messages he encrypts. For example, when encrypting very sensitive data, the sender should be able to make sure that only the designated receiver and none of his delegatees will be able to decrypt. Alternatively, he may permit a small number of delegations: on a social network, the sender can decide that only the receiver, his friends and their own friends - but no one else - should see the content. In other words, the sender should have the power to decide how far from the intended receiver the encrypted data can go.

Second, the PRE scheme should also allow for *temporary delegations:* the delegator should be able to impose a validity period to delegations. Specifically, each re-encryption key is associated with a validity period and should only make it possible to re-encrypt ciphertexts during this period.

Third, it is also desired to have a stronger form of collusion-resistance than in existing multi-hop unidirectional PRE systems. A weak form of collusion-resistance was previously achieved for unidirectional PRE schemes in [J. Shao, Z. Cao,. Multi-use unidirectional identity-based proxy re-encryption from hierarchical identitybased encryption. In Information Sciences, pp. 83-95, 2012. J. Shao, P. Liu, Z. Cao, G. Wei. Multi-Use Unidirectional Proxy Re-Encryption. In IEEE International Conference on Communications (ICC) 2011, pp. 1-5, 2011. H. Wang, Z. Cao, L. Wang. Multi-use and unidirectional identity-based proxy re-encryption schemes. Information Sciences 180(20), pp. 4042-4059, 2010.]. However, this notion of master-secret security is a rather weak notion. For example, it can be trivially achieved by augmenting the delegator's private key $sk^*$ with artificial, sufficiently long private key components that are not actually used in the scheme and thus remain independent of the adversary's view.

The present invention provides such a PRE scheme.

## SUMMARY OF INVENTION

In a first aspect, the invention is directed to a method of generating a -$\ell$-level ciphertext for a message in a proxy re-encryption scheme with limited delegations, wherein $\ell$ is an integer such that $1 \le \ell \le L$, a $\ell$-level ciphertext

**EP 2 892 177 A1**

enables $\ell$ - 1 re-encryptions and $L$-1 is a maximum number of possible re-encryptions. A processor generates, in a $\ell$-level group of prime order $p$, a $\ell$-level encryption key for the $\ell$-level ciphertext from a public key and a $\ell$-level generator for the $\ell$-level group; obtains a first ciphertext component by multiplying the message with a generator of a final group $\acute{\mathbb{G}}_L$ of a multi-linear configuration with $L$ levels, the generator being raised to the power of an integer exponent; obtains a second ciphertext component by taking the $\ell$-level encryption key to the power of the integer exponent; and outputs the $\ell$-level ciphertext comprising the integer $\ell$, the first ciphertext component and the second ciphertext component.

In a preferred embodiment, the processor includes an indicator of a time period in the $\ell$-level ciphertext; and, if the integer $\ell > 1$, obtains a third ciphertext component by taking a hash value over the time period to the power of the integer exponent and includes the third ciphertext component in the $\ell$-level ciphertext that is output.

In a second aspect, the invention is directed to a method of re-encrypting a $\ell$-level ciphertext to a $\ell'$-level ciphertext, where $\ell > \ell'$. A processor obtains the $\ell$-level ciphertext comprising an integer $\ell$, a first ciphertext component and a second ciphertext component, the first ciphertext component resulting from a multiplication between a plaintext message and a generator for a group $\acute{\mathbb{G}}_L$ to the power of an integer exponent, the second ciphertext component resulting from taking the $\ell$-level encryption key to the power of the integer exponent; receives a first re-encryption key for all levels; if $\ell' < \ell - 1$, generates a second re-encryption key from the first re-encryption key and a generator for level $\ell'$; generates a re-encrypted ciphertext from the first ciphertext and, if $\ell' < \ell - 1$, the second re-encryption key or, if $\ell' = \ell - 1$, the first re-encryption key; and outputs the $\ell'$-level ciphertext comprising $\ell'$, the first ciphertext and the re-encrypted ciphertext.

In a third aspect, the invention is directed to a method of re-encrypting a $\ell$-level ciphertext for a time period $t$ to a $\ell'$-level ciphertext for the same period $t$, where $\ell > l'$. A processor obtains the $\ell$-level ciphertext comprising an integer $\ell$, the time period $t$, a first, a second and a third ciphertext component, the first ciphertext component resulting from a multiplication between a plaintext message and a generator for a group $\acute{\mathbb{G}}_L$ to the power of an integer exponent, the second ciphertext component resulting from taking the $\ell$-level encryption key to the power of the integer exponent, and the third ciphertext component resulting from taking a hash value over the time period $t$ to the power of the integer exponent; receives a re-encryption key for all levels but only for time period $t$; obtains a new second ciphertext component and a new third ciphertext component by respectively pairing elements of the re-encryption key with the second ciphertext component and the third ciphertext components; and outputs the $\ell'$-level ciphertext comprising the integer $\ell$, the time period $t$, the first, the new second and the new third ciphertext components.

In a fourth aspect, the invention is directed to a method for decrypting a $\ell$-level ciphertext comprising an integer $\ell > 1$, a first ciphertext component and a second ciphertext component, the first ciphertext component resulting from a multiplication between a plaintext message and a power of the generator $g_{i\,L}$ of a final group $G_L$ in a multi-linear configuration with $L$ levels, the second ciphertext component resulting from taking a $\ell$-level encryption key to the power of an integer exponent. A processor sends the second ciphertext component to the final group $\acute{\mathbb{G}}_L$ of the multi-linear configuration, by pairing it with a suitable generator; and recovers the plaintext as a quotient of the first ciphertext component and the image in $\acute{\mathbb{G}}_L$ of the second ciphertext component raised to a power determined by the private key.

In a fifth aspect, the invention is directed to a device for generating a -$\ell$-level ciphertext for a message in a proxy re-encryption scheme with limited delegations, wherein $\ell$ is an integer such that $1 \le \ell \le L$, a $\ell$-level ciphertext enables $\ell$ - 1 re-encryptions and $L$-1 is a maximum number of possible re-encryptions. The device comprises a processor configured to generate, in a $\ell$-level group of prime order $p$, a $\ell$-level encryption key for the $\ell$-level ciphertext from a public key and a $\ell$-level generator for the $\ell$-level group; obtains a first ciphertext component by multiplying the message with a generator of a final group $\acute{\mathbb{G}}_L$ of a multi-linear configuration with $L$ levels, the generator being raised to the power of an integer exponent; obtain a second ciphertext component by taking the $\ell$-level encryption key to the power of the integer exponent; and output the $\ell$-level ciphertext comprising the integer $\ell$, the first ciphertext component and the second ciphertext component.

In a preferred embodiment, the processor is further configured to include an indicator of a time period in the $\ell$-level ciphertext; and, if the integer $\ell > 1$, obtain a third ciphertext component by taking a hash value over the time period to the power of the integer exponent and include the third ciphertext component in the $\ell$-level ciphertext that is output.

In a sixth aspect, the invention is directed to a device for re-encrypting a $\ell$-level ciphertext to a $\ell'$-level ciphertext, where $\ell > \ell'$. The device comprises a processor configured to obtain the $\ell$-level ciphertext comprising an integer $\ell$, a first ciphertext component and a second ciphertext component, the first ciphertext component resulting from a multiplication between a plaintext message and a generator for a group $\acute{\mathbb{G}}_L$ to the power of an integer exponent, the second ciphertext component resulting from taking the $\ell$-level encryption key to the power of the integer exponent; receive a first re-encryption key for all levels; if $\ell' < \ell - 1$, generates a second re-encryption key from the first re-encryption key and a generator for level $\ell'$; generate a re-encrypted ciphertext from the first ciphertext and, if $\ell' < \ell - 1$, the second re-

8

encryption key or, if $\ell' = \ell - 1$, the first re-encryption key; and output the $\ell'$-level ciphertext comprising $\ell'$, the first ciphertext and the re-encrypted ciphertext.

In a seventh aspect, the invention is directed to a device for re-encrypting a $\ell$-level ciphertext for a time period $t$ to a $\ell'$-level ciphertext for the same period $t$, where $\ell > \ell'$. The device comprises a processor configured to obtain the $\ell$-level ciphertext comprising an integer $\ell$, the time period $t$, a first, a second and a third ciphertext component, the first ciphertext component resulting from a multiplication between a plaintext message and a generator for a group $\mathbb{G}_L$ to the power of an integer exponent, the second ciphertext component resulting from taking the $\ell$-level encryption key to the power of the integer exponent, and the third ciphertext component resulting from taking a hash value over the time period t to the power of the integer exponent; receive a re-encryption key for all levels but only for time period t; obtain a new second ciphertext component and a new third ciphertext component by respectively pairing elements of the re-encryption key with the second ciphertext component and the third ciphertext components; and output the $\ell'$-level ciphertext comprising the integer $\ell$, the time period $t$, the first, the new second and the new third ciphertext components.

In an eighth aspect, the invention is directed to a device for decrypting a $\ell$-level ciphertext comprising an integer $\ell > 1$, a first ciphertext component and a second ciphertext component, the first ciphertext component resulting from a multiplication between a plaintext message and a power of the generator $g_L$ of a final group $\mathbb{G}_L$ in a multi-linear configuration with $L$ levels, the second ciphertext component resulting from taking a $\ell$-level encryption key to the power of an integer exponent. The device comprises a processor configured to send the second ciphertext component to the final group $\mathbb{G}_L$ of the multi-linear configuration, by pairing it with a suitable generator; and recover the plaintext as a quotient of the first ciphertext component and the image in $\mathbb{G}_L$ of the second ciphertext component raised to a power determined by the private key.

BRIEF DESCRIPTION OF DRAWINGS

Preferred features of the present invention will now be described, by way of non-limiting example, with reference to the accompanying drawings, in which:

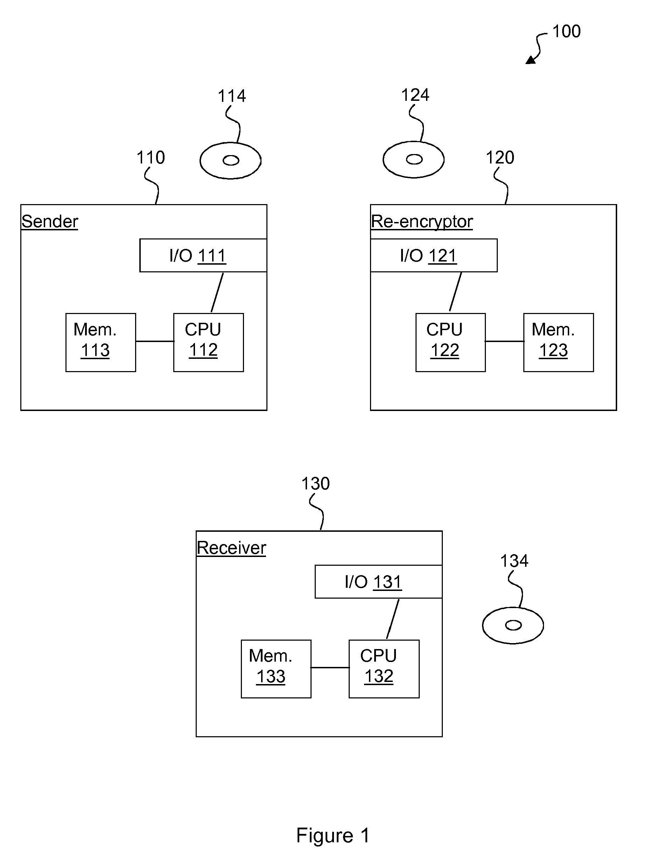

Figure 1 illustrates a proxy re-encryption system according to a preferred embodiment of the invention.

DESCRIPTION OF EMBODIMENTS

First will be described a first PRE construction for a single time period. This construction is inspired from the first unidirectional scheme suggested Ateniese, Fu, Green and Hohenberger.

In their scheme, the second level ciphertexts $(A,B) = (X^r, M \cdot e(g, g)^r)$ are encrypted under a public key $g^x$. They can be re-encrypted into first level ciphertexts

$$\left( e\left( A, R_{xy} \right), B \right) = \left( e(g,g)^{ry}, M \cdot e(g,g)^r \right)$$

using the re-encryption key $R_{xy} = g^{x/y}$. Using its private key $y$ the receiver can then obtain the message.

When the public parameters are set up, an upper bound on the number of re-encryptions must be determined. For this reason, the scheme of the present invention allows the sender to decide how many re-encryptions it tolerates for a given ciphertext. Depending on the encrypted content, the sender may want to allow for a high or a small number $t$ of re-encryptions: to this end, the sender simply encrypts the message at level $\ell = t + 1$. If the sender believes that some specific message should only be read by the intended recipient and none of the latter's delegatees, the sender has also the flexibility not to enable any re-encryption whatsoever and directly encrypt at level 1 in this extreme case.

- **Global-Setup**$(\lambda, L)$: given a security parameter $\lambda$, run $G(\lambda, L)$ - defined in the section "Multilinear maps" - to obtain a set of groups $(\mathbb{G}_1, ..., \mathbb{G}_L)$ each of prime *order p* with generators $g_1, ..., g_L$ such that $g\ell \in \mathbb{G}_\ell$ for each $\ell \in \{1, ..., L\}$. In addition, $g = g_1$. The global parameters are

$$\mathrm{par} := \{(\mathbb{G}_1, ..., \mathbb{G}_L), (g, g_2, ..., g_L)\}$$

To lighten the notation, "par" is omitted in the definition of the subsequent algorithms.

- **Keygen**(): the private key $sk_i$ of user $i$ is set to $x_i \xleftarrow{R} \mathbb{Z}_p$. The public key $pk_i$ of user $i$ is set to $g^{xi}$

- **ReKeygen**($sk_i$, $pk_j$): given the private key $sk_i = x_i$ of user $i$ and the public key $pk_j = g^{xj}$ of user $j$ the algorithm generates the uni-directional re-encryption key from user $i$ to user $j$: $R_{ij} = g^{xj/xi}$. It will be appreciated that the algorithm does not need to know the private *key* $x_j$ in order to compute the re-encryption key $R_{ij} = g^{xj/xi}$.

- **Encrypt**($pk_i$, $\ell$, $M$): to encrypt a message $M \in \mathbb{G}_L$ under the public key $pk_i = g^{xi}$, user $i$ (the sender) proceeds as follows:

  1. Given $pk_i = g^{xi}$, compute $g_{L-\ell+1}^{x_i} = e(g^{x_i}, g_{L-\ell}) \in \mathbb{G}_{L-\ell+1}$.

  2. Pick $r \xleftarrow{R} \mathbb{Z}_p$ and compute $C_0 = M \cdot g_L^r$ and $C_1 = g_{L-\ell+1}^{r \cdot x_i}$. The ciphertext is $C = (\ell, C_0, C_1)$.

- **ReEnc**($\ell$, $\ell'$, $R_{ij}$, $C$): on input the re-encryption key $R_{ij} = B_j^{x/x_i}$ and an $\ell$-th level ciphertext $C = (\ell, C_0, C_1)$, return $\perp$ if $\ell' \geq \ell$. Otherwise, do:

  1. If $\ell' = \ell - 1$, set $\tilde{R}_{ij} = R_{ij}$. Otherwise, i.e. if $\ell' < \ell - 1$, set $\tilde{R}_{ij} = e\left(R_{ij}, g_{\ell-\ell'-1}\right) = g_{\ell-\ell'}^{x_j/x_i}$.

  2. Compute $C'_1 = e(C_1, \tilde{R}_{ij}) \in \mathbb{G}_{L-\ell'+1}$ and return $C' = (\ell', C_0, C'_1)$.

- **Dec**($sk_i$, $\ell$, C): to decrypt a ciphertext $C = (\ell, C_0, C_1)$ using the private key $sk_i = x_i \in \mathbb{Z}_p$, the receiver computes $M = C_0/e(C_1, \mathcal{G}_{\ell-1})^{1/x_i}$ if $\ell > 1$ and $M = C_0/C_1^{1/x_i}$ if $\ell = 1$.

As in the scheme described in "Improved Proxy Re-Encryption Schemes with Applications to Secure Distributed Storage", $\ell$-th level ciphertexts can be publicly turned into ($\ell - 1$)-th level ciphertexts encrypted for the same receiver if the identity element of $\mathbb{G}$ is used as a re-encryption key.

While this first scheme works, it unfortunately seems hard to prove secure in the sense of the security definitions given herein even if only one time period is aimed for. To overcome this problem, the second scheme hereinafter comprises randomization of the re-encryption schemes.

To achieve provable security, the preceding scheme is modified using techniques proposed by Boneh and Boyen [D. Boneh, X. Boyen. Efficient Selective-ID Secure Identity-Based Encryption Without Random Oracles. In Eurocrypt'04, Lecture Notes in Computer Science 3027, pp. 223-238, 2004.] that were also used by Libert and Vergnaud [B. Libert, D. Vergnaud. Unidirectional Chosen-Ciphertext Secure Proxu Re-Encryption. IEEE Transactions on Information Theory 57(3), pp. 1786-1802, 2011]. Specifically, re-encryption keys are associated with a period number t and their shape is reminiscent of private keys in the identity-based encryption scheme proposed by Boneh and Boyen, notably in the use of a number-theoretic hash function $F(t) = u^t \cdot v$ for public group elements $u, v \in \mathbb{G}_1$ (it is noted that this hash function is collision-resistant under the discrete logarithm assumption in $G_1$).

It is remarked that, by using Waters' technique [B. Waters. Efficient Identity-Based Encryption Without Random Oracles. In Eurocrypt'05, Lecture Notes in Computer Science 3494, pp. 114-127. Springer 2005.] instead of the Boneh-Boyen techniques, it is possible to modify the scheme to associate re-encryption keys with keywords. Then ciphertexts can be labelled with a sender-chosen keyword and re-encryption is possible when the keywords of the ciphertext coincides with that of the re-encryption key. The only modification is to replace the number theoretic hash function $F(t) = u^t \cdot v$ by a different hash function proposed by Waters. The description hereunder uses the Boneh-Boyen technique, which is more efficient and sufficient for the considered application.

- **Global-Setup**($\lambda$, L): given a security parameter $\lambda$, run $G(\lambda, L)$ - defined in the section "Multilinear maps" - to obtain a set of groups ($\mathbb{G}_1,..., \mathbb{G}_L$) each of prime order $p$ with generators $g_1,..., g_L$ such that $g\ell \in \mathbb{G}_\ell$ for each $\ell \in \{1,..., L\}$. In addition, $g = g_1$. The algorithm also chooses $u, v \xleftarrow{R} \mathbb{G}_1$. The global parameters are

$$\text{par} := \{(\mathbb{G}_1, ..., \mathbb{G}_L), (g, g_2, ..., g_L), u, v\}$$

To lighten the notation, "par" is omitted in the definition of the subsequent algorithms.

- **Keygen**(): the private key $sk_i$ of user $i$ is chosen as a random exponent $x_i \xleftarrow{R} \mathbb{Z}_p$. The corresponding public key $pk_i$ of user $i$ is set to $g^{x_i}$.
- **ReKeygen**($sk_i$, $pk_j$, $t$)$:$ given the private key $sk_i = x_i$ of user $i$ and the public key $pk_j = g^{x_j}$ of user $j$ and a period number $t$, the algorithm generates the uni-directional re-encryption key from user $i$ to user $j$ for period $t$ as$:$

$$R_{ijt} = \left(R_{ijt,1}, R_{ijt,2}\right) = \left(g^{x_j/x_i} \cdot (u^t v)^r, g^{r \cdot x_i}\right)$$

where $u^t v \in G_1$ is the term used for randomizing the generation of re-encryption key and for hiding the period $t$.

- **Encrypt**($pk_i$, t, $\ell$, $M$): to encrypt a message $M \in G_L$ under the public key $pk_i = g^{x_i}$ at level $\ell$ during period $t$, user $i$ (the sender) proceeds as follows:

    1. Compute $g_{L-\ell+1}^{x_i} = e\left(g^{x_i}, g_{L-\ell}\right) \in \mathbb{G}_{L-\ell+1}$.

    2. If $\ell > 1$, pick $s \xleftarrow{R} \mathbb{Z}_p$ and compute $C_0 = M \cdot g_L^s$, $C_1 = g_{L-\ell+1}^{s \cdot x_i}$ and $C_2 = F(t)^s$ and return the ciphertext $C = (\ell, t, C_0, C_1, C_2)$. If $\ell = 1$, pick $s \xleftarrow{R} \mathbb{Z}_p$, compute $C_0 = M \cdot g_L^s$, $C_1 = g_L^{s \cdot x_i}$ and return the ciphertext $C = (\ell, t, C_0, C_1, 1_{\mathbb{G}_1})$, where $1_{\mathbb{G}_1}$ denotes the identity element of $G_1$.

- **ReEnc**($\ell$, $\ell'$, $R_{ijt}$, $C$): on input the re-encryption key $R_{ijt} = (R_{ijt,1}, R_{ijt,2}) = (g_j^{x/x_i} \cdot F(t)^r, B^{r \cdot xi})$ and an $\ell$-th level ciphertext $C = (\ell, t, C_0, C_1, C_2)$, return 1 if $\ell = 1$ (meaning that $C$ cannot be re-encrypted) or if $\ell' \geq \ell$. Otherwise, do:

    1. If $\ell' = \ell - 1$, set $\tilde{C}_1 = C_1$. Otherwise, i.e. if $\ell' < \ell - 1$, set $\tilde{C}_1 = e\left(C_1, g_{\ell-\ell'-1}\right) = g_{L-\ell'}^{s \cdot x_i}$.

    2. Compute $\tilde{R}_{ijt,2} = e\left(R_{ijt,2}, g_{L-\ell'-1}\right) = g_{L-\ell'}^{r \cdot x_i}$. Then compute $C'_1 = e\left(\tilde{C}_1, R_{ijt,1}\right) / e\left(C_2, \tilde{R}_{ijt,2}\right) = g_{L-\ell'+1}^{x_i \cdot s} \in \mathbb{G}_{L-\ell+2}$.

    3. If $\ell' > 1$, return the $\ell'$-th level ciphertext $C' = (\ell', C_0, C'_1, C_2)$. If $\ell' = 1$, return the first-level ciphertext $C' = (1, C_0, C'_1)$.

- **Dec**($sk_i$, $\ell$, $C$): to decrypt a ciphertext $C = (\ell, t, C_0, C_1, C_2)$ using the private key $sk_i = x_i \in \mathbb{Z}_p$, the receiver computes $M = C_0/e(C_1, g_{\ell-1})^{1/x_i}$ if $\ell > 1$ and $M = C_0/C_1^{1/x_i}$ if $\ell = 1$.

The correctness of the re-encryption algorithm of the second scheme can be verified as follows. The equality involving $C'_1$ in step 2 is satisified because, if $\tilde{C}_1 = g_{L-\ell'}^{s \cdot x_i}$ then

$$e\left(\tilde{C}_1, R_{ijt,1}\right) / e\left(C_2, \tilde{R}_{ijt,2}\right) =$$

$$e\left(g_{L-\ell'}^{s \cdot x_i}, g^{x_j/x_i}\right) \cdot e\left(g_{L-\ell'}^{s \cdot x_i}, F(t)^r\right) \cdot e\left(F(t)^s, g_{L-\ell'}^{r \cdot x_i}\right)^{-1} = e\left(g_{L-\ell'}^{s \cdot x_i}, g^{x_j/x_i}\right) = g_{L-\ell'+1}^{s \cdot x_i}.$$

It can be checked that the scheme is a generalization of the first scheme. If $u = v = 1_{\mathbb{G}_1}$ and $r = 1$, then the first scheme is obtained.

As in the original scheme described by Ateniese, Fu, Green and Hohenberger, $\ell$-th level ciphertexts can be publicly turned into ($\ell - 1$)-th level ciphertexts encrypted for the same receiver if the identity element G is used as a re-encryption key.

It can be proved that the second scheme is sematically secure at level *L* (resp. at level 1) assuming that the ML-DBDHI (resp. ML-DBDH) assumption holds.

Figure 1 illustrates a proxy re-encryption system 100 according to a preferred embodiment of the present invention. For ease of illustration and comprehension, the connections between the devices in the system have been omitted.

The system 100 comprises a sender 110, a re-encryptor 120 and a receiver 130, each comprising at least one interface unit 111, 121, 131 configured for communication with other devices, at least one processor ("processor") 112, 122, 132 and at least one memory 113, 123, 133 configured for storing data, such as accumulators and intermediary calculation results.

The processor 112 of the sender 110 is configured to perform the Key generation, the Encryption and the Re-encryption key generation parts, the processor 122 of the re-encryptor 120 is configured to perform the re-encryption part and the processor 133 of the receiver 130 is configured to perform the decryption part of the first and the second PRE schemes. A first non-transitory computer program product 114 such as a CD-ROM or a DVD comprises stored instructions that, when executed by the processor 112 of the sender 110, performs the the Key generation, the Encryption and the Re-encryption key generation parts according to the invention. A second non-transitory computer program product 124 comprises stored instructions that, when executed by the processor 122 of the re-encryptor 120, performs the re-encryption part according to the invention. A third non-transitory computer program product 134 comprises stored instructions that, when executed by the processor 132 of the re-encryptor 130, performs the decryption part according to the invention.

It will thus be appreciated that the present invention provides a multi-hop unidirectional PRE scheme where the sender can set an upper bound on the number of possible re-directions for the data he encrypts. In the second scheme, the sender can also impose a period validity for the re-encryption keys that he delivers and thus make sure that the delegations will not remain valid forever. Moreover, the second scheme satisfies a stronger notion of collusion-resistance than previous multi-hop unidirectional PRE proposals.

The skilled person will appreciate that the schemes of the present invention can be used in such varied applications as, for example:

- Collaborative routing, especially in ad-hoc networks.
- Partial sharing of an item of data such as a picture on social networks. The item can be shared among immediate neighbours (friends) or at a second level (friends of friends), etc. since the invention can control the depth of the partial sharing and since it does not require trust from the social network.
- Digital content, such as films and songs, may be resold, but only a limited number of times and possibly for a limited time.
- Peer-to-peer systems may benefit from limited proxy re-encryption either to protect users' privacy or to restrict the sharing of a chunk to a set of "close" peers separated by a number of hops.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

**Claims**

1. A method of generating a $\ell$-level ciphertext for a message in a proxy re-encryption scheme with limited delegations, wherein $\ell$ is an integer such that $1 \leq \ell \leq L$, a $\ell$-level ciphertext enables $\ell - 1$ re-encryptions and $L$-1 is a maximum number of possible re-encryptions, the method comprising the steps, at a device (110) comprising a processor (112), of:

- generating, in a $\ell$-level group of prime order $p$, a $\ell$-level encryption key for the $\ell$-level ciphertext from a public key and a $\ell$-level generator for the $\ell$-level group;

- obtaining a first ciphertext component by multiplying the message with a generator of a final group $\mathbb{G}_{,L}$ of a multi-linear configuration with $L$ levels, the generator being raised to the power of an integer exponent;

- obtaining a second ciphertext component by taking the $\ell$-level encryption key to the power of the integer exponent; and

- outputting the $\ell$-level ciphertext comprising the integer $\ell$, the first ciphertext component and the second ciphertext component.

2. The method of claim 1, further comprising the steps of:

- including an indicator of a time period in the $\ell$-level ciphertext; and
- if the integer f > 1:

- obtaining a third ciphertext component by taking a hash value over the time period to the power of the integer exponent; and
- including the third ciphertext component in the $\ell$-level ciphertext that is output.

3. A method of re-encrypting a $\ell$-level ciphertext to a $\ell$'-level ciphertext, where $\ell > \ell$', the method comprising the steps, at a device (120) comprising a processor (122), of:

- obtaining the $\ell$-level ciphertext comprising an integer $\ell$, a first ciphertext component and a second ciphertext component, the first ciphertext component resulting from a multiplication between a plaintext message and a generator for a group $G_L$ to the power of an integer exponent, the second ciphertext component resulting from taking the $\ell$-level encryption key to the power of the integer exponent;
- receiving a first re-encryption key for all levels;
- if $\ell' < \ell - 1$, generating a second re-encryption key from the first re-encryption key and a generator for level $\ell'$;
- generating a re-encrypted ciphertext from the first ciphertext and, if $\ell' < \ell - 1$, the second re-encryption key or, if $\ell' = \ell - 1$, the first re-encryption key; and
- outputting the $\ell$'-level ciphertext comprising $\ell'$, the first ciphertext and the re-encrypted ciphertext.

4. A method of re-encrypting a $\ell$-level ciphertext for a time period $t$ to a -$\ell$'-level ciphertext for the same period $t$, where $\ell > \ell$', the method comprising the steps, at a device (120) comprising a processor (122), of:

- obtaining the $\ell$-level ciphertext comprising an integer $\ell$, the time period $t$, a first, a second and a third ciphertext component, the first ciphertext component resulting from a multiplication between a plaintext message and a generator for a group $G_L$ to the power of an integer exponent, the second ciphertext component resulting from taking the $\ell$-level encryption key to the power of the integer exponent, and the third ciphertext component resulting from taking a hash value over the time period $t$ to the power of the integer exponent;
- receiving a re-encryption key for all levels but only for time period $t$;
- obtaining a new second ciphertext component and a new third ciphertext component by respectively pairing elements of the re-encryption key with the second ciphertext component and the third ciphertext components ; and

outputting the $\ell$'-level ciphertext comprising the integer $\ell$, the time period $t$, the first, the new second and the new third ciphertext components.

5. A method for decrypting a $\ell$-level ciphertext comprising an integer $\ell > 1$, a first ciphertext component and a second ciphertext component, the first ciphertext component resulting from a multiplication between a plaintext message and a power of the generator $g_L$ of a final group $G_L$ in a multi-linear configuration with $L$ levels, the second ciphertext component resulting from taking a $\ell$-level encryption key to the power of an integer exponent, the method comprising the steps, at a device (130) comprising a processor (132), of:

- sending the second ciphertext component to the final group $\acute{\mathbb{G}}_L$ of the multi-linear configuration, by pairing it with a suitable generator; and

- recovering the plaintext as a quotient of the first ciphertext component and the image in $\acute{\mathbb{G}}_L$ of the second ciphertext component raised to a power determined by the private key.

6. A device (110) for generating a $\ell$-level ciphertext for a message in a proxy re-encryption scheme with limited delegations, wherein $\ell$ is an integer such that $1 \leq \ell \leq L$, a $\ell$-level ciphertext enables $\ell - 1$ re-encryptions and $L-1$ is a maximum number of possible re-encryptions, the device comprising a processor (112) configured to:

- generate, in a $\ell$-level group of prime order $p$, a $\ell$-level encryption key for the $\ell$-level ciphertext from a public key and a $\ell$-level generator for the $\ell$-level group;

- obtain a first ciphertext component by multiplying the message with a generator of a final group $\acute{\mathbb{G}}_L$ of a multi-linear configuration with $L$ levels, the generator being raised to the power of an integer exponent;

- obtain a second ciphertext component by taking the $\ell$-level encryption key to the power of the integer exponent; and
- output the $\ell$-level ciphertext comprising the integer $\ell$, the first ciphertext component and the second ciphertext component.

**7.** The device of claim 6, wherein the processor is further configured to:

- include an indicator of a time period in the $\ell$-level ciphertext; and
- if the integer $\ell > 1$:

- obtain a third ciphertext component by taking a hash value over the time period to the power of the integer exponent; and
- include the third ciphertext component in the $\ell$-level ciphertext that is output.

**8.** A device (120) for re-encrypting a $\ell$-level ciphertext to a $\ell'$-level ciphertext, where $\ell > \ell'$, the method comprising the steps, the device comprising a processor (122) configured to:

- obtain the $\ell$-level ciphertext comprising an integer $\ell$, a first ciphertext component and a second ciphertext component, the first ciphertext component resulting from a multiplication between a plaintext message and a generator for a group $\mathbb{G}_L$ to the power of an integer exponent, the second ciphertext component resulting from taking the $\ell$-level encryption key to the power of the integer exponent;
- receive a first re-encryption key for all levels;
- if $\ell' < \ell - 1$, generate a second re-encryption key from the first re-encryption key and a generator for level $\ell'$;
- generate a re-encrypted ciphertext from the first ciphertext and, if $\ell' < \ell - 1$, the second re-encryption key or, if $\ell' = \ell - 1$, the first re-encryption key; and
- output the $\ell'$-level ciphertext comprising $\ell'$, the first ciphertext and the re-encrypted ciphertext.

**9.** A device (120) for re-encrypting a $\ell$-level ciphertext for a time period t to a $\ell'$-level ciphertext for the same period $t$, where $\ell > \ell'$, the device comprising a processor (122) configured to:

- obtain the $\ell$-level ciphertext comprising an integer $\ell$, the time period $t$, a first, a second and a third ciphertext component, the first ciphertext component resulting from a multiplication between a plaintext message and a generator for a group $\mathbb{G}_L$ to the power of an integer exponent, the second ciphertext component resulting from taking the $\ell$-level encryption key to the power of the integer exponent, and the third ciphertext component resulting from taking a hash value over the time period $t$ to the power of the integer exponent;
- receive a re-encryption key for all levels but only for time period $t$;
- obtain a new second ciphertext component and a new third ciphertext component by respectively pairing elements of the re-encryption key with the second ciphertext component and the third ciphertext components ; and

output the $\ell'$-level ciphertext comprising the integer $\ell$, the time period $t$, the first, the new second and the new third ciphertext components.

**10.** A device (130) for decrypting a $\ell$-level ciphertext comprising an integer $\ell > 1$, a first ciphertext component and a second ciphertext component, the first ciphertext component resulting from a multiplication between a plaintext message and a power of the generator $g_L$ of a final group $\mathbb{G}_L$ in a multi-linear configuration with $L$ levels, the second ciphertext component resulting from taking a $\ell$-level encryption key to the power of an integer exponent, the device comprising a processor (132) configured to:

- send the second ciphertext component to the final group $\mathbb{G}_L$ of the multi-linear configuration, by pairing it with a suitable generator; and

- recover the plaintext as a quotient of the first ciphertext component and the image in $\mathbb{G}_L$ of the second ciphertext component raised to a power determined by the private key.

Figure 1

Europäisches
Patentamt

European
Patent Office

Office européen
des brevets

## EUROPEAN SEARCH REPORT

Application Number

EP 14 30 5004

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XU AN WANG ET AL: "K-times Proxy Re-encryption", COMPUTATIONAL INTELLIGENCE AND SECURITY (CIS), 2011 SEVENTH INTERNATIONAL CONFERENCE ON, IEEE, 3 December 2011 (2011-12-03), pages 949-953, XP032094535, DOI: 10.1109/CIS.2011.213 ISBN: 978-1-4577-2008-6 | 1,3,5,6, 8,10 | INV. H04L9/08 H04L9/30 H04L29/06 |
| Y | * the whole document * | 2,4,7,9 | |
| Y | ISSHIKI TOSHIYUKI ET AL BASU SAMIK SBASUIOTAASTATE EDU IOWA STATE UNIVERSITY DEPARTMENT OF COMPUTER SCIENCE 210 ATANASOFF HALL 500: "Attacks to the Proxy Re-Encryption Schemes from IWSEC2011", 18 November 2013 (2013-11-18), RADIO FREQUENCY IDENTIFICATION; [LECTURE NOTES IN COMPUTER SCIENCE], SPRINGER BERLIN HEIDELBERG, BERLIN, HEIDELBERG, PAGE(S) 290 - 302, XP047198560, ISSN: 0302-9743 ISBN: 978-3-642-45339-7 * abstract * * Section: "3.2 The Scheme with Temporary Delegation"; page 297 - page 298 * | 2,4,7,9 | |
| A | MATTHEW GREEN ET AL: "Identity-Based Proxy Re-encryption", INTERNATIONAL ASSOCIATION FOR CRYPTOLOGIC RESEARCH,, vol. 20061216:130358, 16 December 2006 (2006-12-16), pages 1-21, XP061002048, [retrieved on 2006-12-16] * the whole document * | 1-10 | |

TECHNICAL FIELDS SEARCHED (IPC)

H04L
G06F

The present search report has been drawn up for all claims

| Place of search | Date of completion of the search | Examiner |
|---|---|---|
| Munich | 28 May 2014 | Mariggis, Athanasios |

EPO FORM 1503 03.82 (P04C01)

**EP 2 892 177 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. DEVIGNE.** Protocoles de re-chiffrement pour le stockage de données. *PhD thesis,* December 2013
- **G. ATENIESE ; K. FU ; S. HOHENBERGER.** Improved Proxy Re-Encryption Schemes with Applications to Secure Distributed Storage. *NDSS, 2005 and in ACM TISSEC,* 2006, vol. 9 (1), 1-30
- **S. GARG ; C. GENTRY ; S. HALEVI.** Candidate Multilinear Maps from Ideal Lattices. *Eurocrypt'13, in Lecture Notes in Computer Science,* vol. 7881, 1-17
- **S. GARG ; C. GENTRY ; S. HALEVI ; A. SAHAI ; B.WATERS.** Attribute-Based Encryption for Circuits from Multilinear Maps. *Crypto'13, in Lecture Notes in Computer Science 8043,* 479-499
- **J.-S. CORON ; T. LEPOINT ; M. TIBOUCHI.** Practical Multilinear Maps over the Integers. *Lecture Notes in Computer Science,* vol. 8043, 476-493
- **M. BLAZE ; G. BLEUMER ; M. STRAUSS.** Divertible Protocols and Atomic Proxy Cryptography. *Eurocrypt'98, Lecture Notes in Computer Science,* 1998, vol. 1403, 127-144
- **G. ATENIESE ; K. FU ; M. GREEN ; S. HOHENBERGER.** Improved Proxy Re-Encryption Schemes with Applications to Secure Distributed Storage. *NDSS,* 2005
- Improved proxy re-encryption schemes with applications to secure distributed storage. *ACM TISSEC,* 2006, vol. 9 (1), 1-30
- Identity-based encryption from the Weil pairing. **D. BONEH ; M. FRANKLIN.** Crypto'01, Lecture Notes in Computer Science. Springer, 2001, vol. 2139, 213-229
- Chosen-Ciphertext Secure Proxy Re-Encryption. **R. CANETTI ; S. HOHENBERGER.** ACM CCS'07. ACM Press, 2007, 185-194
- Unidirectional Chosen-Ciphertext Secure Proxy Re-Encryption. **B. LIBERT ; D. VERGNAUD.** PKC'08, Lecture Notes in Computer Science. Springer, 2008, vol. 4939
- *IEEE Transactions on Information Theory,* 2011, vol. 57 (3), 1786-1802
- Tracing Malicious Proxies in Proxy Re-encryption. **B. LIBERT ; D. VERGNAUD.** Pairing'08, Lecture Notes in Computer Science. Springer, 2008, vol. 5209
- **J. WENG ; R. DENG ; S. LIU ; K. CHEN.** Chosen-ciphertext secure bidirectional proxy re-encryption schemes without pairings. *Information Sciences,* 2010, vol. 180 (24), 5077-5089
- **J. WENG ; M. CHEN ; Y. YANG ; R. DENG ; K. CHEN ; F. BAO.** CCA-Secure Unidirectional Proxy Re-Encryption in the Adaptive Corruption Model without Random Oracles. *IACR Cryptology ePrint Archive,* 2010
- **G. HANAOKA ; Y. KAWAI ; N. KUNIHIRO ; T. MATSUDA, J. ; R. ZHANG ; Y. ZHAO.** Generic Construction of Chosen Ciphertext Secure Proxy Re-Encryption. *CT-RSA 2012, Lecture Notes in Computer Science,* 2012, vol. 7178, 349-364
- **J. SHAO ; Z. CAO.** CCA-Secure Proxy Re-encryption without Pairings. *Public Key Cryptography,* 2009, 357-376
- *Lecture Notes in Computer Science,* 2009, vol. 5443
- **T. MATSUDA ; R. NISHIMAKI ; K. TANAKA.** CCA Proxy Re-Encryption without Bilinear Maps in the Standard Model. *Public Key Cryptography 2010, Lecture Notes in Computer Science,* 2010, vol. 6056, 261-278
- **S. CHOW ; J. WENG ; Y. YANG ; R. DENG.** Efficient Unidirectional Proxy Re-Encryption. *Africacrypt 2010, Lecture Notes in Computer Science,* 2010, vol. 6055, 316-332
- **J. WENG ; Y. ZHAO ; G. HANAOKA.** On the Security of a Bidirectional Proxy Re-encryption Scheme from PKC 2010. *Public Key Cryptography 2011, Lecture Notes in Computer Science,* 2011, vol. 6571, 284-295
- **M. MAMBO ; E. OKAMOTO.** Proxy Cryptosystems: Delegation of the Power to Decrypt Ciphertexts. *IEICE Trans. Fund. Elect. Communications and CS,* 1997, vol. E80-A/1, 54-63
- On Quorum Controlled Asymmetric Proxy Re-encryption. **M. JAKOBSSON.** PKC'99, Lecture Notes in Computer Science. Springer, 1999, vol. 1560, 112-121
- **Y. DODIS ; A.-A. IVAN.** Proxy Cryptography Revisited. *Proxy Cryptography Revisited,* 2003
- Identity based cryptosystems and signature schemes. **A. SHAMIR.** Crypto'84, Lecture Notes in Computer Science. Springer, 1984, vol. 196, 47-53

17

- Proxy re-signatures: new definitions, algorithms, and applications. **G. ATENIESE ; S. HOHENBERGER.** ACM Conference on Computer and Communications Security. ACM Press, 2005, 310-319
- Multi-Use Unidirectional Proxy Re-Signatures. **B. LIBERT ; D. VERGNAUD.** ACM-CCS'08. ACM-Press, 2008
- Towards a secure and interoperable DRM architecture. **G. TABAN ; A. CÁRDENAS ; V. D. GLIGOR.** DRM'06, ACM workshop on Digital rights management. ACM, 2006, 69-78
- Securely Obfuscating Re-encryption. **S. HOHENBERGER ; G. N. ROTHBLUM ; A. SHELAT ; V. VAIKUNTANATHAN.** TCC'07, Lecture Notes in Computer Science. Springer, 2007, vol. 4392, 233-252
- Functional Re-encryption and Collusion-Resistant Obfuscation. **N. CHANDRAN ; M. CHASE ; V. VAIKUNTANATHAN.** TCC'12, Lecture Notes in Computer Science. Springer, 2012, vol. 7194, 404-421
- Identity-Based Proxy Re-encryption. **M. GREEN ; G. ATENIESE.** ACNS'07, Lecture Notes in Computer Science. Springer, 2007, vol. 4521, 288-306
- Identity-Based Proxy Re-encryption Without Random Oracles. **C.-K. CHU ; W. G. TZENG.** ISC'07, Lecture Notes in Computer Science. Springer, 2007, vol. 4779, 189-202
- **G. ATENIESE ; K. BENSON ; S. HOHENBERGER.** Key-Private Proxy Re-Encryption. *Cryptology ePrint Archive: Report,* 2008, 463
- **J. SHAO ; Z. CAO.** Multi-use unidirectional identity-based proxy re-encryption from hierarchical identitybased encryption. *Information Sciences,* 2012, 83-95
- **J. SHAO ; P. LIU ; Z. CAO ; G. WEI.** Multi-Use Unidirectional Proxy Re-Encryption. *IEEE International Conference on Communications,* 2011, 1-5
- **H. WANG ; Z. CAO ; L. WANG.** Multi-use and unidirectional identity-based proxy re-encryption schemes. *Information Sciences,* 2010, vol. 180 (20), 4042-4059
- **D. BONEH ; X. BOYEN.** Efficient Selective-ID Secure Identity-Based Encryption Without Random Oracles. *Eurocrypt'04, Lecture Notes in Computer Science,* 2004, vol. 3027, 223-238
- **B. LIBERT ; D. VERGNAUD.** Unidirectional Chosen-Ciphertext Secure Proxu Re-Encryption. *IEEE Transactions on Information Theory,* 2011, vol. 57 (3), 1786-1802
- Efficient Identity-Based Encryption Without Random Oracles. **B. WATERS.** Eurocrypt'05, Lecture Notes in Computer Science. Springer, 2005, vol. 3494, 114-127